# EUROPÄISCHE PATENTSCHRIFT

(11) **EP 3 523 515 B1**
(45) Veröffentlichungstag und Bekanntmachung des Hinweises auf die Patenterteilung: **17.02.2021**
(21) Anmeldenummer: 17780761.7
(22) Anmeldetag: 09.10.2017
(51) Int. Cl.: F01N 3/021, F01N 3/023, F01N 3/035, F01N 3/36, F01N 9/00, F02M 25/08, B60K 15/035

(54) **VERFAHREN ZUR REGENERATION EINES PARTIKELFILTERS SOWIE KRAFTFAHRZEUG MIT EINEM PARTIKELFILTER**
METHOD FOR REGENERATING A PARTICLE FILTER, AND MOTOR VEHICLE HAVING A PARTICLE FILTER
PROCÉDÉ DE RÉGÉNÉRATION D'UN FILTRE À PARTICULES ET VÉHICULE À MOTEUR DOTÉ D'UN FILTRE À PARTICULES

(30) Priorität: 10.10.2016 DE 102016119212
(43) Veröffentlichungstag der Anmeldung: 14.08.2019
(73) Patentinhaber: Volkswagen Aktiengesellschaft, 38440 Wolfsburg (DE)
(72) Erfinder: WODAUSCH, Jens, 38108 Braunschweig (DE); ZINK, Florian, 74906 Bad Rappenau (DE); KNAUP, Jan, 38444 Wolfsburg (DE)
(74) Vertreter: Gulde & Partner
(86) Internationale Anmeldenummer: PCT/EP2017/075694
(87) Internationale Veröffentlichungsnummer: WO 2018/069254

(56) Entgegenhaltungen:
- DE-A1- 10 005 909
- DE-A1-102013 202 433
- DE-T5-112008 002 466
- US-A1- 2004 261 403

## Beschreibung

Die Erfindung betrifft ein Verfahren zur Regeneration eines Partikelfilters im Abgaskanal eines Kraftfahrzeuges sowie ein Kraftfahrzeug mit einem im Abgaskanal angeordneten Partikelfilter.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Im Fahrbetrieb wird ein solcher Ottopartikelfilter mit Ruß beladen. Damit der Abgasgegendruck nicht zu stark ansteigt, muss dieser Ottopartikelfilter kontinuierlich oder periodisch regeneriert werden. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann.

Der Kraftstoff für den Betrieb des Verbrennungsmotors wird in einem Kraftstofftank des Kraftfahrzeuges gelagert. Anhängig von der Umgebungstemperatur, der Temperatur des Kraftstoffs im Tank, der freien Flüssigkeitsoberfläche und weiteren Einflussfaktoren kommt es zu einer Verdunstung des Kraftstoffes, insbesondere von sogenannten leicht flüchtigen, niedermolekularen Kohlenwasserstoffen. Die Kraftstoffdämpfe werden üblicherweise in einem Aktivkohlefilter des Tanksystems aufgefangen, der in einer Einfüllleitung des Kraftstofftanks angeordnet ist. Da die Aufnahmekapazität von Aktivkohlefiltern begrenzt ist, muss dieser Aktivkohlefilter von Zeit zu Zeit regeneriert werden und die darin zurückgehaltenen Kohlenwasserstoffe ausgespült werden. Dabei sollen diese Kohlenwasserstoffe nicht unkontrolliert als Schadstoffemissionen in die Umgebung entweichen. Dazu wird der Aktivkohlefilter mit einem Luftstrom gespült, welcher dem Verbrennungsmotors zugeführt ist, um die aus dem Aktivkohlefilter ausgespülten Kohlenwasserstoffe in den Brennräumen des Verbrennungsmotors umzusetzen.

Aus der DE 41 34 199 C2 ist ein Verfahren bekannt, bei dem in Abhängigkeit von einem Betriebszustand des Verbrennungsmotors der Spülluftstrom mit den aus dem Aktivkohlefilter ausgespülten Kohlenwasserstoffen wahlweise der Verbrennungsluft des Verbrennungsmotors oder der Abgasanlage, insbesondere einer Sekundärluftleitung der Abgasanlage, des Kraftfahrzeuges zugeführt wird, um die Kohlenwasserstoffe exotherm auf dem Drei-Wege-Katalysator umzusetzen.

Ein Verfahren zur Regeneration eines Partikelfilters im Abgaskanal eines Verbrennungsmotors, insbesondere eines Ottomotors, ist beispielsweise aus der DE 10 2013 220 899 A1 bekannt. Dabei ist eine Lambda-Regelung für den Ottomotor vorgesehen, wobei das Verbrennungsluftverhältnis zur Regeneration des Partikelfilters ausgehend von einem stöchiometrischen Verbrennungsluftverhältnis in Richtung eines überstöchiometrischen Verbrennungsluftverhältnisses verstellt wird, und mit dem Sauerstoffüberschuss eine Regeneration des Partikelfilters durch ein Oxidieren des Rußes erreicht wird.

Zudem ist aus der DE 101 30 633 A1 ein Verfahren zur Regeneration eines Partikelfilters bekannt, welches ein Temperaturmanagement umfasst, um die Temperatur für eine Regeneration des Partikelfilters anzuheben beziehungsweise ein Auskühlen des Partikelfilters zu vermeiden, wobei an einem Oxidationskatalysator NOx zu NO₂ aufoxidiert wird und mit dem gebildeten NO₂ die im Partikelfilter abgeschiedenen Rußpartikel zu Kohlenstoffdioxid CO₂ und molekularem Stickstoff N₂ umgesetzt werden.

Aus der DE 10 2013 202 433 A1 ist ein Verfahren zur Regeneration eines Aktivkohlefilters eines Verbrennungsmotors bekannt, wobei die im Aktivkohlefilter zurückgehaltenen Kraftstoffdämpfe bei einer Schubphase des Verbrennungsmotors oder einem kurzfristigen Stillstand in den Abgaskanal eingeleitet werden und dort mit dem Sauerstoff aus dem Schubbetrieb auf einem betriebswarmen Katalysator umgesetzt werden.

Die DE 100 05 909 A1 offenbart ein Verfahren zur Entschwefelung eines NOx-Speicherkatalysators bei einem im Magerbetrieb betriebenen direkteinspritzenden Ottomotor. Dabei werden die in der Tankentlüftung in einem Aktivkohlefilter zurückgehaltenen Kraftstoffdämpfe dazu genutzt, um den NOx-Speicherkatalysator zu entschwefeln.

Die US 2004 / 261 403 A1 offenbart ein Verfahren zur Entschwefelung eines NOx-Speicherkatalysators in der Abgasanlage eines Dieselmotors. Dabei wird dem Dieselkraftstoff ein Alkohol, insbesondere Methanol, beigemischt. Dabei verdampft der Alkohol in diesem Kraftstoffgemisch und wird in einem separaten Tank aufgefangen, um diesen Alkohol zur Entschwefelung des NOx-Speicherkatalysators in die Abgasanlage einzuspritzen.

Nachteilig an den bekannten Heizmaßnahmen ist jedoch, dass bei den bekannten Verfahren innermotorische Maßnahmen zum Aufheizen des Partikelfilters auf eine Regenerationstemperatur und die damit verbundenen innermotorischen Maßnahmen zu einem erhöhten Kraftstoffverbrauch und/oder Komforteinbußen im Fahrbetrieb des Kraftfahrzeuges führen.

Der Erfindung liegt nun die Aufgabe zugrunde, die für eine Regeneration des Partikelfilters notwendige Temperatur zu erreichen, ohne dabei innermotorische Maßnahmen durchführen zu müssen.

Die Aufgabe wird durch ein Verfahren zur Regeneration eines Partikelfilters im Abgaskanal eines Kraftfahrzeuges gelöst, wobei das Kraftfahrzeug aufweist: einen mit einem Kraftstoff betreibbaren Verbrennungsmotor, einen Abgaskanal, in welchem zumindest ein Partikelfilter angeordnet ist, einen Kraftstofftank, einen mit dem Kraftstofftank fluidführend verbundenen und ein Sorptionsmittel aufweisenden Sorptionsmittelbehälter, eine den Sorptionsmittelbehälter mit dem Verbrennungsmotor oder dem Abgaskanal stromaufwärts des Partikelfilters verbindende Spülleitung, und wobei zum Aufheizen des Partikelfilters der im Sorptionsmittelbehälter zurückgehaltene Kraftstoff der Spülmittelleitung zugeführt wird. Durch ein erfindungsgemäßes Verfahren können die in dem Sorptionsmittelbehälter zurückgehalten Kohlenwasserstoffe durch eine exotherme Umsetzung im Abgaskanal genutzt werden, um eine Temperatur des Partikelfilters anzuheben, ohne dass eine Verstellung der innermotorischen Parameter des Verbrennungsmotors notwendig ist. Somit kann eine Regeneration des Partikelfilters ohne einen Kraftstoff-Mehrverbrauch durchgeführt werden und der Fahrkomfort bleibt erhalten, da er nicht durch eine zeitweilige Verstellung der Einspritzparameter des Verbrennungsmotors negativ beeinflusst wird.

Durch die in den abhängigen Ansprüchen aufgeführten Maßnahmen sind vorteilhafte Verbesserungen und Weiterentwicklungen des im unabhängigen Anspruch genannten Verfahrens zur Regeneration eines Partikelfilters möglich.

Erfindungsgemäß ist vorgesehen, dass ein Spülen des Sorptionsmittelbehälters und eine damit verbundene Zufuhr des im Sorptionsmittelbehälter zurückgehaltenen Kraftstoffs in den Abgaskanal des Verbrennungsmotors in einer Schubphase des Verbrennungsmotors erfolgt. In einer Schubphase des Verbrennungsmotors ist eine Drosselklappe des Verbrennungsmotors im Wesentlichen geöffnet, sodass ein vergleichsweise hoher Massen- und Volumenstrom an Frischluft den Verbrennungsmotor durchströmt und somit hohe Spülmengen durch den Sorptionsbehälter und dem darin befindlichen Sorptionsmittel darstellbar sind. Dabei hängt im Schubbetrieb die darstellbare Spülmenge praktisch nicht vom Fahrverhalten ab, da im ungefeuerten Schubbetrieb die durch den Verbrennungsmotor geförderte Luft nicht mit über die Kraftstoffleitung und das Kraftstoffeinspritzsystem zugeführtem Kraftstoff vermischt und verbrannt wird. Daher enthält das Abgas im Schubbetrieb stets einen hohen Sauerstoffanteil, der zur Oxidation des aus dem Sorptionsmittelbehälter ausgetragenen Kraftstoffdampfes genutzt werden kann. Zudem kann dieser hohe Sauerstoffanteil genutzt werden, um die im Partikelfilter zurückgehaltenen Rußpartikel zu oxidieren und somit den Partikelfilter zu regenerieren. Zudem sind an dem bestehenden System zur Umsetzung des Verfahrens keine oder nur sehr geringe konstruktive Maßnahmen erforderlich. Vielmehr reicht eine entsprechend eingerichtete Steuereinrichtung aus, um das Verfahren durchzuführen. Demgegenüber ist bei aus dem Stand der Technik bekannten Systemen das Öffnen von Tankentlüftungsventilen im Schubbetrieb unterbunden.

In einer vorteilhaften Weiterbildung der Erfindung ist vorgesehen, dass zusätzlich innermotorische Maßnahmen zur Erhöhung der Abgastemperatur eingeleitet werden. Als innermotorische Maßnahmen kommt beispielsweise ein Lambda-Split-Betrieb infrage, also das Betreiben einer Hälfte der Brennräume mit einem überstöchiometrischen Verbrennungsluftverhältnis und ein Betreiben einer zweiten Hälfte von Brennräumen mit einem unterstöchiometrischen Verbrennungsluftverhältnis, wobei der unverbrannte Kraftstoff aus den unterstöchiometrisch betriebenen Brennräumen mit dem Restsauerstoff aus den überstöchiometrisch betriebenen Brennräumen im Abgaskanal umgesetzt wird, und somit für eine Temperaturerhöhung sorgt. Alternativ ist eine Verstellung des Zündwinkels in Richtung spät zur Temperaturerhöhung des Abgases bekannt. Durch eine Kombination von innermotorischen Maßnahmen und die Einbringung der Kohlenwasserstoffe aus dem Sorptionsmittelbehälter kann eine Regeneration des Partikelfilters auch in Betriebsphasen ermöglicht werden, in denen allein mit innermotorischen Maßnahmen keine Regeneration möglich wäre.

Erfindungsgemäß ist vorgesehen, dass ein Beladungszustand des Partikelfilters ermittelt wird, und bei Feststellung der Notwendigkeit einer Regeneration des Partikelfilters ein Spülvorgang des Sorptionsmittelbehälters durchgeführt wird. Der Beladungszustand des Partikelfilters kann beispielsweise durch eine Differenzdruckmessung über den Partikelfilter oder durch ein Beladungsmodell ermittelt werden. Dabei kann der Sorptionsmittelbehälter periodisch mit den Regenerationszyklen des Partikelfilters regeneriert werden und wird somit regelmäßig gespült.

Besonders bevorzugt ist dabei, wenn eine Abgastemperatur im Abgaskanal, vorzugsweise unmittelbar stromaufwärts des Partikelfilters, ermittelt wird, und ein Spülvorgang des Sorptionsmittelbehälters erfolgt, wenn die Abgastemperatur unterhalb einer ersten Schwellentemperatur liegt. Vorteilhaft ist eine Spülung der im Sorptionsmittel beziehungsweise im Sorptionsmittelbehälter zurückgehaltenen Kohlenwasserstoff vor allem dann, wenn das Abgas im Abgaskanal eine Temperatur aufweist, welche unterhalb einer Regenerationstemperatur des Partikelfilters, insbesondere unterhalb von 600°C liegt. Ein Spülvorgang des Sorptionsmittelbehälters kann und sollte verhindert werden, wenn die Abgastemperatur oberhalb dieser ersten Schwellentemperatur liegt, um eine thermische Schädigung des Partikelfilters durch ein weiteres Aufheizen zu vermeiden.

Gemäß einer weiteren Verbesserung des Verfahrens ist vorgesehen, dass ein Spülvorgang des Sorptionsmittelbehälters nur dann erfolgt, wenn die Abgastemperatur oberhalb einer zweiten Schwellentemperatur, insbesondere oberhalb einer Light-off-Temperatur des Drei-Wege-Katalysators, liegt. Abgaskatalysatoren benötigen eine bestimmte Mindesttemperatur, die auch als Anspring- oder Light-off-Temperatur bezeichnet wird, um eine ausreichende katalytische Aktivität aufzuweisen. Dabei ist die Light-off-Temperatur als diejenige Temperatur definiert, bei der der Katalysator 50% seiner maximalen Konvertierungsrate aufweist. Liegt die Abgastemperatur und insbesondere die Temperatur eines Kohlenwasserstoffe oxidierenden Katalysators unterhalb einer zweiten Schwellentemperatur, so können in den Abgaskanal eingebrachte Kohlenwasserstoffe nicht hinreichend umgesetzt werden, wodurch keine hinreichende exotherme Reaktion zum Aufheizen des Partikelfilters auftritt. Bei sehr niedrigen Abgastemperaturen können in den Abgaskanal eingebrachte Kohlenwasserstoffe sogar zu einer Abkühlung des Abgases führen, wodurch der erfindungsgemäße Zweck des Verfahrens nicht erreicht wird. Daher ist es sinnvoll, einen Spülvorgang des Sorptionsmittelbehälters nur dann durchzuführen, wenn die Abgastemperatur oberhalb einer zweiten Schwellentemperatur liegt.

In einer bevorzugten Ausführung des Verfahrens ist vorgesehen, dass ein zum Spülen des Sorptionsbehälters genutzter Luftstrom mittels einer Pump- oder Saugwirkung des Verbrennungsmotors erzeugt wird. Im Schubbetrieb, bei dem eine kinetische Energie oder aktuelle Leistung des Fahrzeuges größer ist als eine durch den Fahrer angeforderte Leistung, wird das Fahrzeug durch den Schub bewegt und der Verbrennungsmotor geschleppt, das heißt, es wird kein Kraftstoff durch das Kraftstoffeinspritzsystem in die Brennräume des Verbrennungsmotors eingespritzt. Durch Ausnutzen des geschleppten Motors als Pumpe erübrigt sich ein zusätzliches Fördermittel für die Luftförderung durch den Sorptionsm ittelbehälter.

Zur weiteren Verbesserung des Verfahrens ist vorgesehen, dass ein durch einen Spülvorgang des Sorptionsbehälters dem Abgaskanal zugeführter Volumenstrom von Kraftstoff durch Einstellen eines Massen- oder Volumenstroms der durch den Sorptionsmittelbehälter geförderten Luft gesteuert oder geregelt wird. Dabei wird der Massen- oder Volumenstrom bevorzugt so gesteuert oder geregelt, dass während einer Schubphase ein Sauerstoffüberschuss (λ > 1) im Abgaskanal vorliegt. Auf diese Weise kann in einem Schubbetrieb die weitestgehend vollständige Umsetzung des über den Spülvorgang eingebrachten Kraftstoffes sichergestellt werden, sodass der Spülvorgang zu keiner unerwünschten Erhöhung einer Emission von unverbrannten Kohlenwasserstoffen führt.

Eine weitere Verbesserung des vorgeschlagenen Verfahrens ist dadurch möglich, dass ein durch den Sorptionsmittelbehälter geförderter Massen- oder Volumenstrom durch eine Öffnungszeit und/oder einen Öffnungsquerschnitt eines in der Spülleitung angeordneten Stellmittels, insbesondere eines Tankentlüftungsventils, eingestellt wird. Durch Einstellen einer vorbestimmten Öffnungszeit und/oder eines vorbestimmten Öffnungsquerschnitts des Stellmittels kann auf einfache Art und Weise der Anteil von Kohlenwasserstoffen im Abgas eingestellt werden. Dabei ist das Tankentlüftungsventil als Stellmittel besonders geeignet, da es sich in unmittelbarer Nähe des Sorptionsbehälters befindet und somit eine besonders einfache Interaktion zwischen Sorptionsbehälter und Tankentlüftungsventil möglich ist.

Erfindungsgemäß wird ein Kraftfahrzeug mit einem mit Kraftstoff betreibbaren Verbrennungsmotor, einem Abgassystem, in welchem ein Partikelfilter angeordnet ist, einem Kraftstofftank, einem mit dem Kraftstofftank fluidführend verbundenen Sorptionsmittelbehälter, in welchem ein Sorptionsmittel enthalten ist, einer den Sorptionsmittelbehälter mit dem Verbrennungsmotor und/oder dem Abgassystem stromaufwärts des Partikelfilters verbindenden Spülleitung sowie mit einer zur Ausführung des vorgeschlagenen Verfahrens eingerichteten Steuereinheit, insbesondere einem Steuergerät, vorgeschlagen.

In einer bevorzugten Ausführungsform des Kraftfahrzeuges ist vorgesehen, dass in dem Abgassystem stromabwärts eines Auslasses des Verbrennungsmotors und stromaufwärts des Partikelfilters ein Drei-Wege-Katalysator angeordnet ist. Auf der Oberfläche des Drei-Wege-Katalysators können die dem Abgaskanal aus dem Sorptionsmittelbehälter zugeführten, unverbrannten Kohlenwasserstoffe auf einfache Art und Weise mit dem Restsauerstoff im Abgaskanal exotherm umgesetzt werden, was zu einer Erhöhung des Abgastemperatur vor Eintritt in den Partikelfilter führt. Dabei sind die Konvertierungsraten deutlich höher als in anderen Bereichen des Abgaskanals.

Alternativ ist in einer weiteren Ausführungsform der Erfindung vorgesehen, dass in dem Abgassystem ein Vier-Wege-Katalysator angeordnet ist, welcher einen Partikelfilter mit einer drei-Wege-katalytisch wirksamen Beschichtung aufweist. Alternativ kann eine Umsetzung der unverbrannten Kohlenwasserstoffe aus dem Sorptionsmittelbehälter auf der Oberfläche eines Vier-Wege-Katalysators erfolgen. Ein Vier-Wege-Katalysator umfasst die Funktionalität eines Drei-Wege-Katalysators und eines Partikelfilters, wobei bevorzugt eine drei-Wege-katalytisch wirksame Beschichtung auf die Oberfläche eines Partikelfilters aufgebracht ist. Dabei führt eine exotherme Umsetzung der unverbrannten Kohlenwasserstoffe auf der drei-Wege-katalytisch wirksamen Beschichtung zu einer direkten Erwärmung des Partikelfilters, sodass eine besonders effiziente Ausnutzung der Energie der Kohlenwasserstoffe erfolgt, da keine zusätzliche Abwärme über die Wandung des Abgaskanals verloren geht.

In einer vorteilhaften Verbesserung des Kraftfahrzeuges ist vorgesehen, dass die Spülleitung stromabwärts eines Auslasses und stromaufwärts des Drei-Wege-Katalysators oder des Vier-Wege-Katalysators in einen Abgaskanal des Abgassystems mündet. Durch ein Einmünden der Spülleitung stromabwärts des Auslasses des Verbrennungsmotors wird sichergestellt, dass sich die Kohlenwasserstoffe nicht an kalten Brennraumwänden niederschlagen und dort auskondensieren, was zu einer erhöhten Kohlenwasserstoff-Emission führen kann. Zudem kann die vorhandene Lambdaregelung des Drei-Wege-Katalysators oder Vier-Wege-Katalysators genutzt werden, um einen Volumen- oder Massenstrom an unverbrannten Kohlenwasserstoffen aus dem Sorptionsmittelbehälter einzuregeln und nur so viel Kohlenwasserstoffe dem Abgaskanal zuzuführen, dass eine im Wesentlichen vollständige Umsetzung auf der Oberfläche des Katalysators erfolgt. Dadurch wird ein Anstieg der Kohlenwasserstoff-Emissionen, insbesondere im Schubbetrieb, vermieden.

Zur weiteren Verbesserung des Kraftfahrzeuges ist vorgesehen, dass der Sorptionsmittelbehälter fluidisch mit einer Saugstrahlpumpe verbunden ist. Durch eine Saugstrahlpumpe ist eine Förderung des im Sorptionsmittelbehälter zurückgehaltenen Kraftstoffes möglich, ohne dass dem System zusätzliche Energie zum Spülen des Sorptionsmittelbehälters zugeführt werden muss. Auch wenn der Kraftstoffmehrverbrauch bei einer angetriebenen Spülpumpe äußerst gering ist, so kann dieser Mehrverbrauch bei Verwendung einer Saugstrahlpumpe vermieden werden. Zudem ist die Saugstrahlpumpe autonom von einer externen Energieversorgung, sodass ein Ausfallrisiko reduziert wird.

In einer weiteren Verbesserung des Kraftfahrzeuges ist vorgesehen, dass an dem Sorptionsmittelbehälter ein Spülgebläse zum Spülen des Sorptionsmittelbehälters angeordnet ist. Alternativ kann der Sorptionsmittelbehälter durch ein Spülgebläse entleert werden. Ein Spülgebläse hat den Vorteil, dass eine Spülung des Sorptionsmittelbehälters im Wesentlichen unabhängig von einem Betriebszustand des Verbrennungsmotors und somit auch unabhängig von einer Regeneration des Partikelfilters erfolgen kann. Dies ist vorteilhaft, wenn beispielsweise ein Spülen des Sorptionsmittelbehälters zwischen zwei Intervallen zur Regeneration des Partikelfilters notwendig ist.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Dabei sind gleiche Bauteile oder Bauteile mit gleicher Funktion in den unterschiedlichen Zeichnungen jeweils mit gleichen Bezugsziffern gekennzeichnet. Es zeigen:
- Figur 1: ein erstes Ausführungsbeispiel eines Blockschaltbildes eines erfindungsgemäßen Kraftfahrzeuges;
- Figur 2: ein alternatives Ausführungsbeispiel eines Blockschaltbildes eines Kraftfahrzeuges gemäß der Erfindung; und
- Figur 3: ein weiteres, alternatives Ausführungsbeispiel eines erfindungsgemäßen Kraftfahrzeuges in einer Blockschaltbilddarstellung;

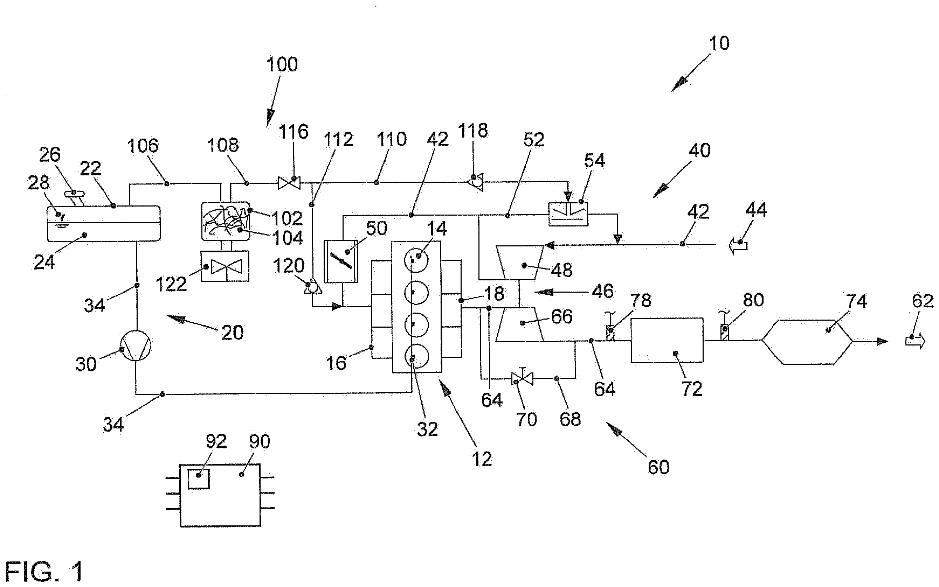

Figur 1 zeigt ein Blockschaltbild eines erfindungsgemäßen Kraftfahrzeuges 10. Das Kraftfahrzeug umfasst einen Verbrennungsmotor 12, ein Kraftstoffversorgungssystem 20, ein Luftversorgungssystem 40, ein Abgassystem 60 sowie ein Kraftstoffdampfsorptionssystem 100.

Der Verbrennungsmotor 12 umfasst zumindest einen Brennraum, hier beispielsweise vier Brennräume 14 und ist vorzugsweise ein (fremdgezündeter) Ottomotor, kann aber auch ein (selbstzündender) Dieselmotor sein. Im folgenden Beispiel ist der Verbrennungsmotor 12 als mittels Zündkerzen fremdgezündeter Ottomotor ausgeführt. Der Verbrennungsmotor 12 ist mit einem Kraftstoff 24 betreibbar, welcher in einem Kraftstofftank 22 des Kraftfahrzeuges 10 bevorratet ist. Der Kraftstofftank 22 kann über einen Einfüllstutzen 26 befüllt werden und ist mit einem Füllstandsensor 28 zum Erfassen des Füllstands ausgestattet. Der Kraftstoff 24 wird über eine aus dem Kraftstofftank 22 abzweigende Kraftstoffleitung 34 mittels einer Kraftstoffpumpe 30 dem Verbrennungsmotor 12 zugeführt, wo er mittels eines Kraftstoffeinspritzsystems 32 in die Brennräume 14 des Verbrennungsmotors 12 eingespritzt wird.

Über das Luftversorgungssystem 40 wird dem Verbrennungsmotor 12 Frischluft 44 zugeführt, welche aus der Umgebung angesaugt und über eine Ansaugleitung 42 einem Einlass 16, der die Frischluft 44 auf die Brennräume 42 des Verbrennungsmotors 12 verteilt, zur Verfügung gestellt wird. Im dargestellten Beispiel wird die Frischluft 44 durch einen Verdichter 48 eines Abgasturboladers 46 verdichtet, um den Verbrennungsmotor 12 mit einem gegenüber dem Umgebungsdruck erhöhten Ladedruck und damit einer erhöhten Leistung betreiben zu können. Der Verdichter 48 wird durch eine im Abgassystem 60 angeordnete Turbine 66 angetrieben, welche über eine Welle mit dem Verdichter 48 verbunden ist. In der Ansaugleitung 42 ist stromab des Verdichters 48 eine stellbare Drosselklappe 50 angeordnet, mittels welcher die Füllung der Brennräume 14 steuerbar oder regelbar ist. Das Luftversorgungssystem 40 verfügt ferner über eine Rückstromleitung 52, die stromabwärts des Verdichters 48 von der Ansaugleitung 42 abzweigt und stromaufwärts des Verdichters 35 wieder in die Ansaugleitung 42 einmündet. In der Rückstromleitung 52 ist eine Saugstrahlpumpe 54 angeordnet, deren Funktion an späterer Stelle im Rahmen der Beschreibung des Kraftstoffdampfsorptionssystems 100 noch näher erläutert wird.

Ein Abgas 62 des Verbrennungsmotors 12 wird über einen Auslass 18, insbesondere einen Abgaskrümmer, dem Abgassystem 60 zugeführt und dort katalytisch nachbehandelt. Das Abgassystem 60 umfasst hierzu einen Abgaskanal 64, in dem die bereits erwähnte Turbine 66 des Abgasturboladers 46 angeordnet ist, sodass das Abgas 62 unter Entzug von kinetischer Energie die Turbine 66 und damit den Verdichter 48 antreibt. Die Turbine 66 ist mittels eines Waste-Gates 68 umgehbar, wobei der durch das Waste-Gate 68 geleitete Abgasanteil durch ein Waste-Gate-Ventil 70, insbesondere ein elektrisch betätigbares Ventil, einstellbar ist. Um schädliche und limitierte Abgaskomponenten in unschädliche Abgaskomponenten zu konvertieren, weist das Abgassystem 60 einen Katalysator 72, insbesondere einen Drei-Wege-Katalysator, auf. Abgaskatalysatoren sind üblicherweise aus einem vom Abgas 62 durchströmbaren Katalysatorträger aufgebaut, welcher mit einer katalytisch wirksamen Beschichtung versehen ist. Dabei bestimmt die chemische Zusammensetzung der katalytischen Beschichtung, welche Abgaskomponenten katalytisch umgesetzt werden. Oxidationskatalysatoren katalysieren die Konvertierung von unverbrannten Kohlenwasserstoffen HC und Kohlenmonoxid CO, Reduktionskatalysatoren unterstützen die Konvertierung von Stickoxiden NOx und Drei-Wege-Katalysatoren vereinen die Funktion von Oxidations- und Reduktionskatalysatoren. Vorliegend ist der dargestellte Katalysator 72 ein Drei-Wege-Katalysator. Stromabwärts des Katalysators 72 ist ein Partikelfilter 74 angeordnet, um die bei der Verbrennung des Kraftstoffes 24 in den Brennräumen 14 des Verbrennungsmotors 12 auftretenden Partikel zurückzuhalten und deren Emission zu hindern. Darüber hinaus kann das Abgassystem 60 weitere Komponenten zur Abgasnachbehandlung, insbesondere einen NOx-Speicherkatalysator oder einen Katalysator zur selektiven, katalytischen Reduktion von Stickoxiden aufweisen. Stromaufwärts des Katalysators 72 ist eine erste Lambdasonde 78 im Abgaskanal 64 angeordnet, welche ein Luft-Kraftstoffverhältnis (nachfolgend Luftverhältnis), genauer gesagt den Anteil von Sauerstoff im rohen, unbehandelten Abgas 62 misst. Die erste Lambdasonde 78 dient hauptsächlich zur Regelung des dem Verbrennungsmotor 12 zugeführten Luftkraftstoffgemischs beziehungsweise dem Kraftstoffanteil in diesem. Stromab des Abgaskatalysators 72 ist eine zweite Lambdasonde 80 im Abgaskanal 64 angeordnet, welche das Luft-Kraftstoffverhältnis (nachfolgend Luftverhältnis) beziehungsweise den Anteil von Sauerstoff im Abgas 62 nach Passage des Katalysators 72 misst. Funktion der zweiten Lambdasonde 80 ist unter anderem, die Funktion des Katalysators 72 zu überwachen. Beide Lambdasonden 78, 80 geben in Abhängigkeit des Sauerstoffanteils des Abgases 62 ein Sondensignal in Form einer Spannung aus. Die Lambdasonden 78, 80 können unabhängig voneinander als Breitbandlambdasonden oder Sprunglambdasonden ausgebildet sein. Das Spannungssignal von Breitbandlambdasonden verläuft in weiten Bereichen im Wesentlichen proportional zum Lambdawert das Abgases, während das Spannungssignal von Sprunglambdasonden lediglich um einen Lambdawert von 1 ± 0,03 eine starke Abhängigkeit vom Lambdawert zeigt. Bei einem Ottomotor 12 mit nachgeschaltetem Dreiwegekatalysator 72 wird der Verbrennungsmotor 12 in den meisten Betriebspunkten mit einem stöchiometrischen Verbrennungslambda von Eins geregelt, da bei diesem Wert der Dreiwegekatalysator 72 seine optimale Konvertierungsleistung der drei Abgaskomponenten HC, CO und NOx aufweist. In dieser Konstellation ist die erste Lambdasonde 78 häufig als Breitbandlambdasonde ausgestaltet und die zweite Lambdasonde 80 als Sprunglambdasonde. Das Abgassystem 60 kann weitere, hier nicht dargestellte Sensoren umfassen, insbesondere einen Temperatursensor zur Erfassung der Abgastemperatur, der Temperatur des Katalysators 72 oder der Temperatur des Partikelfilters 74.

Das Kraftstoffdampfsorptionssystem 100 weist einen Sorptionsmittelbehälter 102 auf, in dem ein Sorptionsmittel 104 zur Sorption von Kraftstoffdämpfen, also Kohlenwasserstoffen, vorliegt. Unter Sorption wird vorliegend jegliche reversible Bindung verstanden, beispielsweise Absorption, physikalische Adsorption (Physisorption) und/oder chemische Adsorption (Chemisorption). Vorzugsweise handelt es sich bei dem Sorptionsmittel 104 um Aktivkohle, insbesondere einen Aktivkohlefilter, der Kraftstoffdämpfe durch physikalische Adsorption bindet. Der Sorptionsmittelbehälter 102 ist über eine Kraftstoffdampfleitung 106 mit dem Kraftstofftank 22 verbunden. Eine Spülleitung 108 zweigt vom Sorptionsmittelbehälter 104 ab und teilt sich in eine erste Teilspülleitung 110 und eine zweite Teilspülleitung 112 auf. Die erste Teilspülleitung 110 mündet über die Saugseite der Saugstrahlpumpe 54 in die Rückstromleitung 52. Die zweite Teilspülleitung 112 mündet stromab der Drosselklappe 50 in die Ansaugleitung 42 oder direkt in den Einlass 16 des Verbrennungsmotors 12. In dem gemeinsamen Abschnitt der Spülleitung 108 ist ein Stellmittel zur Einstellung, insbesondere Begrenzung, des Volumenstroms in der Spülleitung 108 angeordnet. Das Stellmittel ist im vorliegenden Beispiel als elektromotorisch stellbares Ventil ausgestaltet und wird nachfolgend auch als Tankentlüftungsventil 116 bezeichnet. In den Teilspülleitungen 110, 112 ist jeweils ein Sperrmittel 118, 120 angeordnet, das ausgestaltet ist, eine Durchströmung nur in Richtung der Rückstromleitung 52 beziehungsweise der Ansaugleitung 42 oder dem Einlass 16 zuzulassen. Ist der stromabwärtige Druck am Sperrmittel 118, 120 größer als der stromaufwärtige Druck oder größer als ein vorbestimmter Druck, schließen die Sperrmittel 118, 120 selbsttätig. Das Kraftstoffdampfsorptionssystem 100 kann ferner ein Diagnosemodul umfassen, welches über zwei Leitungen fluidführend mit dem Sorptionsmittelbehälter 102 verbunden ist. Das Diagnosemodul weist ein mit der Umgebung verbundenes Überdruckventil und eine Pumpe auf (beides nicht dargestellt). Das Diagnosemodul dient einerseits zum Druckausgleich des Sorptionsmittelbehälters 102 und des Kraftstofftanks 22 und andererseits der Überwachung auf eine Tankleckage. Ferner kann an dem Sorptionsmittelbehälter 102 ein Spülgebläse 122 vorgesehen sein, mit welchen die im Sorptionsmittelbehälter 102 zurückgehaltenen Kohlenwasserstoffe in die Spülleitung 108 gefördert werden können. Dabei gibt es grundsätzlich zwei Möglichkeiten: Zum einen kann die Spülluft mittels des Spülgebläses 122 durch den Sorptionsmittelbehälter 102 gefördert werden. Alternativ kann das Spülgebläse 122 im Bereich des ersten Sperrmittels 118 angeordnet sein und die Kohlenwasserstoffe aus dem Sorptionsmittelbehälter 102 saugen. Dabei kann das (zusätzliche) Sperrmittel 118 entfallen. Bei Verwendung eines Spülgebläses 122 kann die Saugstrahlpumpe 54 entfallen. Die Einleitung der unverbrannten Kohlenwasserstoffe aus dem Sorbtionsmittelbehälter 102 in den Abgaskanal 64 erfolgt ebenfalls stromaufwärts der Turbine 66 des Abgasturboladers 46.

Die Steuereinrichtung 90 steuert in an sich bekannter Weise den Betrieb des Verbrennungsmotors 12, insbesondere die zugeführte Verbrennungsluftmenge über die Ansteuerung der Drosselklappe 50, und die zugeführte Kraftstoffmenge über Ansteuerung der Kraftstoffpumpe 30 und des Kraftstoffeinspritzsystems 32. Ferner verfügt die Steuereinrichtung 90 über ein Tankentlüftungssteuermodul 92, das eingerichtet ist, das Kraftstoffdampfsorptionssystem 100 zu steuern und insbesondere das Sorptionsmittel 104 von Zeit zu Zeit mit Frischluft 44 zu spülen, um die sorbierten Kraftstoffdämpfe aus dem Sorptionsmittel 104 zu desorbieren und über die erste Teilspülleitung 110 oder die zweite Teilspülleitung 112 auszutragen und dem Verbrennungsmotor 12 zuzuführen.

Das in Figur 1 dargestellte Kraftstoffdampfsorptionssystem 100 des Fahrzeugs 10 kann in einem Beladungsmodus und mindestens einem Spülmodus betrieben werden und zeigt dabei folgende Funktionen:
In einem Beladungsmodus ist das Tankentlüftungsventil 116 geschlossen. Kraftstoffdämpfe, die aus dem Kraftstoff 24 im Tank 22 verdunsten, gelangen über die Kraftstoffdampfleitung 106 in den Sorptionsmittelbehälter 102, wo sie vom Sorptionsmittel (hier Aktivkohle) 104 adsorbiert werden. Unterdessen ist das in dem Diagnosemodul enthaltene Ventil im Beladungsmodus permanent offen, um so einen Druckausgleich zwischen dem Kraftstofftank 22 beziehungsweise dem Sorptionsmittelbehälter 102 und der Umgebung zu ermöglichen.

Im Spülmodus des Kraftstoffdampfsorptionssystems 100, der einen gefeuerten Spülmodus und einen ungefeuerten Spülmodus umfasst, wird das Tankentlüftungsventil 116 so angesteuert, dass es zumindest zeitweise öffnet, wobei ein freier Strömungsquerschnitt und/oder Öffnungsintervalle durch ein Signal des Tankentlüftungssteuermoduls 92 eingestellt werden. Der Spülmodus kann einerseits beladungsabhängig aktiviert werden, beispielsweise wenn eine vorbestimmte Betriebsdauer im Sorptionsbetriebsmodus abgelaufen ist und somit eine vorbestimmte Beladungsgrenze des Sorptionsmittels 104 mutmaßlich erreicht ist. Alternativ oder ergänzend kann der Spülmodus beladungsunabhängig aktiviert werden, wenn der Betriebspunkt des Fahrzeugs günstig ist.

Der erste, gefeuerte Spülmodus kommt zum Einsatz, wenn der Verbrennungsmotor 12 "gefeuert", das heißt, unter Kraftstoffzufuhr und -verbrennung betrieben wird. Dabei wird die Verbrennungsluft über den Verdichter 48 verdichtet und dem Verbrennungsmotor 12 zugeführt. Ein Teil der verdichteten Luft zweigt stromab des Verdichters 48 von der Luftansaugleitung 42 ab und wird über die Rückführleitung 52 wieder stromauf des Verdichters 48 zugeführt. Sofern ein ausreichend hoher Druck von beispielsweise 1000 mbar, das heißt, ein aufgeladener Betriebspunkt in der Leitung 42 beziehungsweise dem Einlass 16 vorliegt, schließt das in der Leitung 112 angeordnete Ventil 120 und das in der ersten Teilspülleitung 110 angeordnete erste Rückschlagventil 118 öffnet. Wird nun das Tankentlüftungsventil 116 geöffnet, wird mittels des in der Leitung 52 rückgeführten verdichteten Luftstroms Spülluft über die Spülleitungen 108 und 110 durch die Saugstrahlpumpe 53 angesaugt und mit der Verbrennungsluft vermischt. Die hierzu erforderliche Frischluft 44 strömt aus der Umgebung über das Überdruckventil des Diagnosemoduls in den Sorptionsmittelbehälter 102 ein und trägt desorbierten Kraftstoffdampf aus. Die mit dem Kraftstoffdampf beladene Spülluft wird über die Saugstrahlpumpe 54 gemäß dem Venturiprinzip aufgrund der Druckdifferenz in der Ansaugleitung 42 vor und hinter dem Verdichter 48 angesaugt, der Verbrennungsluft zugemischt und über die Ansaugleitung 42 und den Einlass 16 dem Verbrennungsmotor 10 zugeführt. Dort verbrennt der Kraftstoffdampf zusammen mit dem über das Einspritzsystem 32 zugeführten Kraftstoff 24. Das Abgas 62 wird über das Abgassystem 60 abgeführt und katalytisch nachbehandelt.

Der zweite, ungefeuerte Spülmodus kommt in Schubphasen des Fahrzeugs zum Einsatz, in denen das Kraftfahrzeug 10 allein aufgrund seiner überschüssigen kinetischen Energie rollt und Kolben und Ein- und Auslassventile des Verbrennungsmotors 12 durch die drehende Kurbelbeziehungsweise Nockenwelle bewegt ("geschleppt") werden. In Schubphasen wird aus Verbrauchs- und Emissionsgründen die Kraftstoffzufuhr zum Verbrennungsmotor 12 aus dem Kraftstofftank 22 unterbrochen und bei Ottomotoren üblicherweise die Zündung ausgesetzt. Eine Schubphase wird üblicherweise anhand des Pedalwertgebersignals erkannt, beispielsweise wenn der Fahrer das Fahrpedal zurücknimmt, um das Fahrzeug zu verzögern. In einem solchen ungefeuerten Schubbetrieb des Kraftfahrzeugs 10 liegt ein geringer Druck in der Ansaugleitung 42 stromab des Verdichters 48 und in der Rückführleitung 52 vor, sodass das erste Rückschlagventil 118 geschlossen und das zweite, in der zweiten Teilspülleitung 112 angeordnete Rückschlagventil 120 geöffnet ist. Wird nun das Tankentlüftungsventil 116 geöffnet, wird mittels des geschleppten Verbrennungsmotors 12 Luft über die zweite Teilspülleitung 120 angesaugt, die wiederum über das Überdruckventil des Diagnosemoduls aus der Umgebung in den Sorptionsmittelbehälter 102 einströmt und aus dem Sorptionsmittel 104 desorbierten Kraftstoffdampf austrägt. Die somit mit Kraftstoffdampf beladene Spülluft strömt aus dem Behälter 102 durch die Spülleitung 108 und die Teilspülleitung 112 und wird der Verbrennungsluft des Verbrennungsmotors 12 zugemischt. Da der Verbrennungsmotor 12 nicht gefeuert betrieben wird, erfolgt keine motorische Verbrennung der Kohlenwasserstoffe. Vielmehr werden diese erst in dem nachgeschalteten Abgaskatalysator 72 katalytisch umgesetzt.

Im Fahrbetrieb des Kraftfahrzeuges 10 werden die bei der Verbrennung des Kraftstoffes 24 in den Brennräumen 14 des Verbrennungsmotors 12 auftretenden Partikel durch den Partikelfilter 74 im Abgaskanal 64 zurückgehalten. Dabei wird eine Beladung des Partikelfilters 74 anhand einer Differenzdruckmessung, also eines Vergleiches des Drucks in dem Abgaskanal 64 stromaufwärts des Partikelfilters 74 und stromabwärts des Partikelfilters 74, oder anhand eines in dem Steuergerät 90 abgelegten Bilanzierungsmodells ermittelt. Hat der Partikelfilter 74 ein Beladungsniveau erreicht, bei dem eine Regeneration des Partikelfilters 74 notwendig ist, um einen weiteren Anstieg des Abgasgegendrucks durch den mit der Beladung des Partikelfilters 74 steigenden Abgasgegendruck zu vermeiden, so wird in einer Regenerationsphase die Abgastemperatur T_{A} oder eine Temperatur des Partikelfilters 74 ermittelt, und mit einer für die Regeneration des Partikelfilters notwendigen ersten Schwellentemperatur T_{S1} verglichen. Liegt die Abgastemperatur T_{A} und/oder die Temperatur des Partikelfilters 74 unterhalb dieser ersten Schwellentemperatur T_{S1}, so werden in einer Schubphase des Verbrennungsmotors 12 die aus dem Sorptionsmittelbehälter 102 ausgespülten Kraftstoffdämpfe dem Verbrennungsmotor 12 zugeführt, und durch die Brennräume 14 in den Abgaskanal 64 gefördert. Dabei erfolgt eine exotherme Umsetzung der Kraftstoffdämpfe auf dem Drei-Wege-Katalysator 72 mit dem bei einem Schubbetrieb vorliegenden Sauerstoffüberschuss im Abgaskanal 64. Durch die bei dieser exothermen Reaktion freiwerdende Wärme wird der Partikelfilter 74 auf eine Regenerationstemperatur aufgeheizt, wodurch die im Partikelfilter 74 zurückgehaltenen Rußpartikel mit dem bei Schubbetrieb vorliegenden Sauerstoff im Abgaskanal 64 zu Kohlendioxid oxidiert werden.

Alternativ zu einer Förderung des Kraftstoffdampfes aus dem Sorptionsmittelbehälter 102 über eine Saugstrahlpumpe oder einen Druckgradienten kann an dem Sorptionsmittelbehälter 102 der im Sorptionsmittelbehälter 102 beziehungsweise im Sorptionsmittel 104 zurückgehaltene Kraftstoffdampf auch durch das Spülgebläse 122 in die Ansaugleitung 42 oder in den Abgaskanal 64 des Verbrennungsmotors 12 gefördert werden.

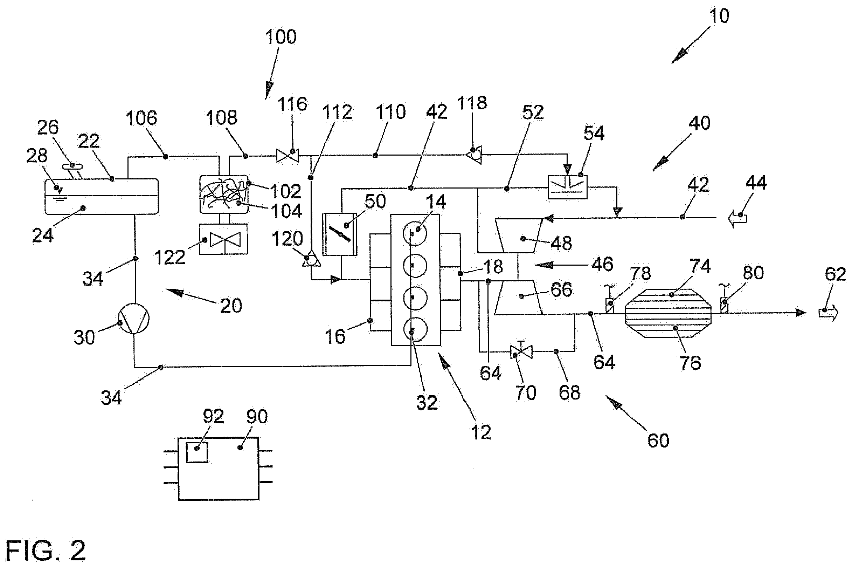

In Figur 2 ist ein alternatives Ausführungsbeispiel eines erfindungsgemäßen Kraftfahrzeuges 10 dargestellt. Bei im Wesentlichen gleichem Aufbau und gleicher Funktion wie zu Figur 1 ausgeführt, ist anstelle eines Drei-Wege-Katalysators 72 und eines Partikelfilters 74 ein Vier-Wege-Katalysator 76 im Abgaskanal 64 des Verbrennungsmotors 12 angeordnet.

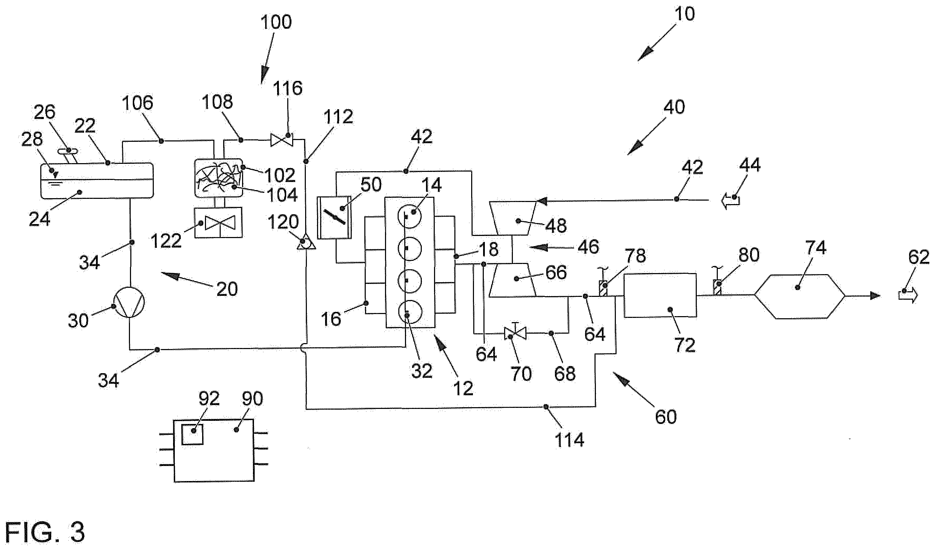

In Figur 3 ist ein weiteres, alternatives Ausführungsbeispiel eines erfindungsgemäßen Kraftfahrzeuges 10 dargestellt. Bei im Wesentlichen gleichem Aufbau und gleicher Funktion wie zu Figur 1 ausgeführt, ist eine dritte Spülleitung 114 vorgesehen, welche den Sorptionsmittelbehälter 102 mit dem Abgaskanal 64 stromaufwärts des Drei-Wege-Katalysators 72 verbindet.

### Bezugszeichenliste

- 10: Kraftfahrzeug
- 12: Verbrennungsmotor
- 14: Brennraum
- 16: Einlass
- 18: Auslass

- 20: Kraftstoffversorgungssystem
- 22: Kraftstofftank
- 24: Kraftstoff
- 26: Einfüllstutzen
- 28: Füllstandsensor

- 30: Kraftstoffpumpe
- 32: Kraftstoffeinspritzsystem
- 34: Kraftstoffleitung

- 40: Luftversorgungssystem
- 42: Ansaugleitung
- 44: Frischluft
- 46: Abgasturbolader
- 48: Verdichter

- 50: Drosselklappe
- 52: Rückstromleitung
- 54: Saugstrahlpumpe

- 60: Abgassystem
- 62: Abgas
- 64: Abgaskanal
- 66: Turbine
- 68: Waste-Gate

- 70: Waste-Gate-Ventil
- 72: Drei-Wege-Katalysator
- 74: Partikelfilter
- 76: Vier-Wege-Katalysator
- 78: erste Lambdasonde

- 80: zweite Lambdasonde

- 90: Steuergerät
- 92: Tankentlüftungssteuermodul

- 100: Kraftstoffdampfsorptionssystem
- 102: Sorptionsmittelbehälter
- 104: Sorptionsmittel / Aktivkohle
- 106: Kraftstoffdampfleitung
- 108: Spülleitung

- 110: erste Spülleitung
- 112: zweite Spülleitung
- 114: dritte Spülleitung
- 116: Stellmittel / Tankentlüftungsventil
- 118: erstes Rückschlagventil

- 120: zweites Rückschlagventil
- 122: Spülgebläse

- λ: Verbrennungsluftverhältnis / Abgasluftverhältnis
- T: Temperatur
- T_{S1}: erste (obere) Schwellentemperatur
- T_{S2}: zweite (untere) Schwellentemperatur

## Patentansprüche

1. Verfahren zur Regeneration eines Partikelfilters (74) in einem Abgassystem (60) eines Kraftfahrzeuges (10), wobei das Kraftfahrzeug (10) aufweist: einen mit einem Kraftstoff (24) betreibbaren Verbrennungsmotor (12), einen Abgaskanal (64), in welchem zumindest ein Partikelfilter (74) angeordnet ist, einen Kraftstofftank (22), einen mit dem Kraftstofftank (22) fluidführend verbundenen und ein Sorptionsmittel (104) aufweisenden Sorptionsmittelbehälter (102), eine den Sorptionsmittelbehälter (102) mit dem Verbrennungsmotor (12) oder dem Abgaskanal (64) stromaufwärts des Partikelfilters (74) verbindende Spülleitung (108, 110, 112, 114), **dadurch gekennzeichnet, dass** zum Aufheizen des Partikelfilters (74) der im Sorptionsmittelbehälter (102) zurückgehaltene Kraftstoff (24) der Spülmittelleitung (108, 110, 112, 114) zugeführt wird, wobei ein Beladungszustand des Partikelfilters (74) ermittelt wird und bei Feststellung der Notwendigkeit einer Regeneration des Partikelfilters (74) ein Spülvorgang des Sorptionsmittelbehälters (102) durchgeführt wird und das Spülen des Sorptionsmittelbehälters (102) und eine damit verbundene Zufuhr des im Sorptionsmittelbehälter (102) zurückgehaltenen Kraftstoffs (24) in den Abgaskanal (64) des Verbrennungsmotors (12) in einer Schubphase des Verbrennungsmotors (12) erfolgt.

2. Verfahren nach Anspruch 1, **dadurch gekennzeichnet, dass** zusätzlich innermotorische Maßnahmen zur Erhöhung der Abgastemperatur (T_{A}) eingeleitet werden.

3. Verfahren nach Anspruch 1, **dadurch gekennzeichnet, dass** eine Abgastemperatur (T_{A}) im Abgaskanal (64) ermittelt wird, und ein Spülvorgang des Sorptionsmittelbehälters (102) erfolgt, wenn die Abgastemperatur (T_{A}) unterhalb einer ersten Schwellentemperatur (T_{S1}) liegt.

4. Verfahren nach Anspruch 3, **dadurch gekennzeichnet, dass** ein Spülvorgang des Sorptionsmittelbehälters (102) nur dann erfolgt, wenn die Abgastemperatur (T_{A}) oberhalb einer zweiten Schwellentemperatur (T_{S2}) liegt.

5. Verfahren nach einem der Ansprüche 1 bis 4, **dadurch gekennzeichnet, dass** ein zum Spülen des Sorptionsmittelbehälters (102) genutzter Luftstrom mittels einer Pump- oder Saugwirkung des Verbrennungsmotors (12) erzeugt wird.

6. Verfahren nach einem der Ansprüche 1 bis 5, **dadurch gekennzeichnet, dass** ein durch einen Spülvorgang des Sorptionsmittelbehälters (102) dem Abgaskanal (64) zugeführter Volumenstrom von Kraftstoff (24) durch Einstellen eines Massen- oder Volumenstroms der durch den Sorptionsmittelbehälter (102) geförderten Luft gesteuert oder geregelt wird.

7. Verfahren nach einem der Ansprüche 1 bis 6, **dadurch gekennzeichnet, dass** ein durch den Sorptionsmittelbehälter (102) geförderter Massen- oder Volumenstrom durch eine Öffnungszeit und/oder einen Öffnungsquerschnitt eines in der Spülleitung (108, 110, 112, 114) angeordneten Stellmittels (116) eingestellt wird.

8. Kraftfahrzeug (10), umfassend:
- einen mit einem Kraftstoff (24) betreibbaren Verbrennungsmotor (12),
- ein Abgassystem (60), in welchem ein Partikelfilter (74) angeordnet ist,
- einen Kraftstofftank (22),
- einen mit dem Kraftstofftank (22) fluidführend verbunden Sorptionsmittelbehälter (102), in welchem ein Sorptionsmittel (104) enthalten ist,
- eine den Sorptionsmittelbehälter (102) mit dem Verbrennungsmotor (12) und/oder dem Abgassystem (60) stromaufwärts des Partikelfilters (74) verbindende Spülleitung (108, 110, 112, 114),
- eine zur Ausführung des Verfahrens nach einem der vorhergehenden Ansprüche eingerichtete Steuereinrichtung (90, 92).

9. Kraftfahrzeug (10) nach Anspruch 8, **dadurch gekennzeichnet, dass** in dem Abgassystem (60) stromabwärts eines Auslasses (18) des Verbrennungsmotors (12) und stromaufwärts des Partikelfilters (74) ein Drei-Wege-Katalysator (72) angeordnet ist.

10. Kraftfahrzeug (10) nach Anspruch 8, **dadurch gekennzeichnet, dass** in dem Abgassystem (60) ein Vier-Wege-Katalysator (76) angeordnet ist, welcher einen Partikelfilter (74) mit einer drei-Wege-katalytisch wirksamen Beschichtung aufweist.

11. Kraftfahrzeug (10) nach Anspruch 9 oder 10, **dadurch gekennzeichnet, dass** die Spülleitung (108, 110, 112, 114) stromabwärts eines Auslasses (18) und stromaufwärts des Drei-Wege-Katalysators (72) oder des Vier-Wege-Katalysators (76) in einen Abgaskanal (64) des Abgassystems (60) mündet.

12. Kraftfahrzeug (10) nach einem der Ansprüche 8 bis 11, **dadurch gekennzeichnet, dass** der Sorptionsmittelbehälter (102) fluidisch mit einer Saugstrahlpumpe (54) verbunden ist.

13. Kraftfahrzeug (10) nach einem der Ansprüche 8 bis 12, **dadurch gekennzeichnet, dass** an dem Sorptionsmittelbehälter (102) ein Spülgebläse (122) zum Spülen des Sorptionsmittelbehälters (102) angeordnet ist.

## Claims

1. A method for the regenerating a particle filter (74) in an exhaust system (60) of a motor vehicle (10), wherein the motor vehicle (10) comprises: an internal combustion engine (12) operable with a fuel (24), an exhaust gas duct (64) in which at least one particle filter (74) is arranged, a fuel tank (22), a sorbent container (102) fluidically connected with the fuel tank (22) and having a sorbent (104), a purging line (108, 110, 112, 114) connecting the sorbent container (102) to the internal combustion engine (12) or to the exhaust gas duct (64) upstream of the particle filter (74); **characterized in that**, to heat the particle filter (74), the fuel (24) retained in the sorbent container (102) is supplied to the purging line (108, 110, 112, 114), wherein a charge state of the particle filter (74) is determined; and, upon determining the need for regeneration of the particle filter (74), a purging process of the sorbent container (102) is performed, and the purging of the sorbent container (102), and associated therewith a supplying of fuel (24) retained in the sorbent container (102) into the exhaust gas duct (64) of the internal combustion engine (12) occurs in a thrust phase of the internal combustion engine (12).

2. The method according to claim 1, **characterized in that** additional measures internal to the engine are initiated for increasing the exhaust gas temperature (T_{A}).

3. The method according to claim 1, **characterized in that** an exhaust gas temperature (T_{A}) in the exhaust gas duct (64) is determined, and a purging process of the sorbent container (102) takes place if the exhaust gas temperature (T_{A}) is below a first threshold temperature (T_{S1}).

4. The method according to claim 3, **characterized in that** a purging process of the sorbent container (102) only takes place if the exhaust gas temperature (T_{A}) is above a second threshold temperature (T_{S2}).

5. The method according to one of claims 1 to 4, **characterized in that** an air flow used for purging the sorbent container (102) is generated by means of a pumping or suction effect of the internal combustion engine (12).

6. The method according to one of claims 1 to 5, **characterized in that** a volumetric flow of fuel (24) supplied to the exhaust gas duct (64) by a purging process of the sorbent container (102) is controlled or regulated by adjusting a mass or volumetric flow of the air conveyed through the sorbent container (102).

7. The method according to one of claims 1 to 6, **characterized in that** a mass or volumetric flow conveyed through the sorbent container (102) is set by an opening time and/or an opening cross section of an adjusting means (116) arranged in the purging line (108, 110, 112, 114).

8. A motor vehicle (10) comprising:
- an internal combustion engine (12) operable with a fuel (24),
- an exhaust system (60) in which a particle filter (74) is arranged,
- a fuel tank (22),
- a sorbent container (102) fluidically connected to the fuel tank (22), in which a sorbent (104) is contained,
- a purging line (108, 110, 112, 114) connecting the sorbent container (102) to the internal combustion engine (12) and/or the exhaust system (60) upstream of the particle filter (74),
- a control device (90, 92) configured to execute the method according to one of the preceding claims.

9. The motor vehicle (10) according to claim 8, **characterized in that** a three-way catalytic converter (72) is arranged in the exhaust system (60), downstream of an outlet (18) of the internal combustion engine (12) and upstream of the particle filter (74).

10. The motor vehicle (10) according to claim 8, **characterized in that** a four-way catalytic converter (76) is arranged in the exhaust system (60), which four-way catalytic converter (76) has a particle filter (74) with a three-way catalytically active coating.

11. The motor vehicle (10) according to claim 9 and 10, **characterized in that** the purging line (108, 110, 112, 114) opens into an exhaust gas duct (64) of the exhaust system (60) downstream of an outlet (18) and upstream of the three-way catalytic converter (72) or of the four-way catalytic converter (76).

12. The motor vehicle (10) according to one of claims 8 to 11, **characterized in that** the sorbent container (102) is fluidically connected to a suction jet pump (54).

13. The motor vehicle (10) according to one of claims 8 to 12, **characterized in that** a purging fan (122) for purging the sorbent container (102) is arranged at the sorbent container (102).

## Revendications

1. Procédé de régénération d'un filtre à particules (74) dans un système de gaz d'échappement (60) d'un véhicule à moteur (10), le véhicule à moteur (10) présentant : un moteur à combustion interne (12) pouvant fonctionner à l'aide d'un carburant (24), un canal de gaz d'échappement (64), dans lequel est disposé au moins un filtre à particules (74), un réservoir de carburant (22), un réservoir d'agent de sorption (102) présentant un agent de sorption (104) et relié en mode de conduction de fluide au réservoir de carburant (22), une conduite de rinçage (108, 110, 112, 114) reliant le réservoir d'agent de sorption (102) au moteur à combustion interne (12) ou au canal de gaz d'échappement (64) en amont du filtre à particules (74), **caractérisé en ce que,** pour le chauffage du filtre à particules (74), le carburant (24) retenu dans le réservoir d'agent de sorption (102) est alimenté à la conduite d'agent de rinçage (108, 110, 112, 114), un état de charge du filtre à particules (74) étant déterminé et, lorsqu'un besoin de régénération du filtre à particules (74) est déterminé, un processus de rinçage du réservoir d'agent de sorption (102) étant réalisé et le rinçage du réservoir d'agent de sorption (102) et une alimentation associée du carburant (24) retenu dans le réservoir d'agent de sorption (102) dans le canal de gaz d'échappement (64) du moteur à combustion interne (12) étant effectués dans une phase de poussée du moteur à combustion interne (12).

2. Procédé selon la revendication 1, **caractérisé en ce que** des mesures supplémentaires internes au moteur sont prises pour l'augmentation de la température des gaz d'échappement (T_{A}).

3. Procédé selon la revendication 1, **caractérisé en ce qu'**une température de gaz d'échappement (T_{A}) est déterminée dans le canal de gaz d'échappement (64) et un processus de rinçage du réservoir d'agent de sorption (102) est effectué lorsque la température de gaz d'échappement (T_{A}) est inférieure à une première température seuil (T_{S1}).

4. Procédé selon la revendication 3, **caractérisé en ce qu'**un processus de rinçage du réservoir d'agent de sorption (102) est effectué uniquement lorsque la température de gaz d'échappement (T_{A}) est supérieure à une deuxième température seuil (T_{S2}).

5. Procédé selon l'une quelconque des revendications 1 à 4, **caractérisé en ce qu'un** flux d'air utilisé pour le rinçage du réservoir d'agent de sorption (102) est produit au moyen d'un effet d'aspiration ou de pompe du moteur à combustion interne (12).

6. Procédé selon l'une quelconque des revendications 1 à 5, **caractérisé en ce qu'**un débit volumique de carburant (24) alimenté par un processus de rinçage du réservoir d'agent de sorption (102) au canal de gaz d'échappement (64) est commandé ou régulé par le réglage d'un débit massique ou volumique de l'air acheminé à travers le réservoir d'agent de sorption (102).

7. Procédé selon l'une quelconque des revendications 1 à 6, **caractérisé en qu'**un débit volumique ou massique acheminé à travers le réservoir d'agent de sorption (102) est réglé par un temps d'ouverture et/ou une section transversale d'ouverture d'un moyen de réglage (116) disposé dans la conduite de rinçage (108, 110, 112, 114).

8. Véhicule à moteur (10) comprenant :
- un moteur à combustion interne (12) pouvant fonctionner à l'aide d'un carburant (24),
- un système de gaz d'échappement (60), dans lequel est disposé un filtre à particules (74),
- un réservoir de carburant (22),
- un réservoir d'agent de sorption (102) relié en mode de conduction de fluide au réservoir de carburant (22), contenant un agent de sorption (104),
- une conduite de rinçage (108, 110, 112, 114) reliant le réservoir d'agent de sorption (102) au moteur à combustion interne (12) et/ou au système de gaz d'échappement (60) en amont du filtre à particules (74),
- un dispositif de commande (90, 92) destiné à mettre en oeuvre le procédé selon l'une quelconque des revendications précédentes.

9. Véhicule à moteur (10) selon la revendication 8, **caractérisé en ce qu'**un catalyseur à trois voies (72) est disposé dans le système de gaz d'échappement (60), en aval d'une sortie (18) du moteur à combustion interne (12) et en amont du filtre à particules (74).

10. Véhicule à moteur (10) selon la revendication 8, **caractérisé en ce qu'**un catalyseur à quatre voies (76), qui présente un filtre à particules (74) pourvu d'un revêtement à action catalytique à trois voies, est disposé dans le système de gaz d'échappement (60).

11. Véhicule à moteur (10) selon la revendication 9 ou 10, **caractérisé en ce que** la conduite de rinçage (108, 110, 112, 114) débouche en aval d'une sortie (18) et en amont du catalyseur à trois voies (72) ou du catalyseur à quatre voies (76) dans un canal de gaz d'échappement (64) du système de gaz d'échappement (60).

12. Véhicule à moteur (10) selon l'une quelconque des revendications 8 à 11, **caractérisé en ce que** le réservoir d'agent de sorption (102) est relié par voie fluidique à une pompe à jet aspirant (54).

13. Véhicule à moteur (10) selon l'une quelconque des revendications 8 à 12, **caractérisé en ce qu'**un ventilateur de rinçage (122) pour le rinçage du réservoir d'agent de sorption (102) est disposé au niveau du réservoir d'agent de sorption (102).
